Europäisches Patentamt

European Patent Office

Office européen des brevets

(11) Veröffentlichungsnummer: **0 288 674**

**A1**

## (12) EUROPÄISCHE PATENTANMELDUNG

(21) Anmeldenummer: 88102218.0

(22) Anmeldetag: 16.02.88

(51) Int. Cl.⁴: **F16B 13/06**

(30) Priorität: 10.04.87 DE 3712213

(43) Veröffentlichungstag der Anmeldung:
02.11.88 Patentblatt 88/44

(84) Benannte Vertragsstaaten:
AT BE CH ES FR GB IT LI NL

(71) Anmelder: **fischerwerke Artur Fischer GmbH & Co. KG**
**Weinhalde 14 - 18**
**D-7244 Waldachtal 3/Tumlingen(DE)**

(72) Erfinder: **Fischer, Artur, Prof. Dr. h.c.**
**Weinhalde 34**
**D-7244 Waldachtal 3/Tumlingen(DE)**

(54) **Befestigungselement.**

(57) Befestigungselemente, die zur Befestigung von hohen Lasten dienen, werden mittels eines Spreizkörpers (3) im Bohrloch (5) verspannt. Besitzt das Befestigungselement an seiner der Außenwand zugewandten Seite ein Innengewinde (7) für die Aufnahme einer Befestigungsschraube (10), so muß gewährleistet sein, daß das Befestigungselement vor dem Aufspreizen des Spreizkörpers (3) gegenüber der Wandoberfläche zurückgesetzt im Bohrloch angeordnet ist. Um je nach Größe und Tragkraft des Befestigungselementes eine optimale Position für das Befestigungselement vor dem Aufspreizen des Spreizkörpers (3) zu erhalten, ist ein Distanzelement (4) vorgesehen, welches in das der Wandoberfläche zugewandte Innengewinde (7) eingreift. Das Distanzelement (4) wird nach dem Positionieren des Befestigungselementes entfernt, damit die eigentliche Befestigungsschraube (10) in das Innengewinde (7) eingesetzt werden kann. Das Befestigungselement gewährleistet somit eine sehr einfache Montage und stets optimale Positionierung im Bohrloch (5).

EP 0 288 674 A1

### Befestigungselement

Die Erfindung betrifft ein Befestigungselement gemäß der Gattung des Hauptanspruchs.

Es sind Befestigungselemente bekannt, die aus einem Gewindebolzen, einer Spreizhülse und einem in die Spreizhülse einziehbaren Spreizkörper bestehen. Der Spreizkörper ist dabei üblicherweise als Spreizkonus ausgebildet. Die Spreizhülse besitzt von ihrer dem Spreizkonus zugewandten Stirnseite ausgehende Längsschlitze, die beim Einziehen des Spreizkörpers ein Aufspreizen der Spreizhülse ermöglichen. Am anderen Ende kann zur Befestigung eines gewünschten Gegenstandes ein Innengewinde vorgesehen sein, in das eine Befestigungsschraube einschraubbar ist. Die Befestigungsschraube dient zur Befestigung eines gewünschten Gegenstandes an der Wand eines Mauerwerks.

Damit die Spreizhülse beim Festziehen der Befestigungsschraube aufgespreizt werden kann, ist es erforderlich, daß der Spreizkonus in die Spreizhülse hineingezogen werden kann. Dies ist jedoch nur dann möglich, wenn das im Befestigungselement vorgesehene Innengewinde in ausreichend großem Abstand von der Wandoberfläche im Bohrloch liegt. Nur in diesem Fall ist es möglich, das Befestigungselement in Richtung Wandoberfläche zu ziehen, wobei der Konus in die ortsfest im Bohrloch gelagerte Spreizhülse eindringen kann und eine Aufspreizung bewirkt.

Der Erfindung liegt die Aufgabe zugrunde, ein Befestigungselement zu schaffen, das in der erforderlichen Weise versenkt im Bohrloch eingebracht werden kann, damit eine ausreichende Spreizwirkung beim Anziehen der Befestigungsschraube möglich ist.

Die Lösung dieser Aufgabe wird bei einem Befestigungselement der eingangs genannten Gattung durch die im kennzeichnenden Teil des Hauptanspruchs angegebenen Merkmale erreicht.

Durch die Verwendung eines herausnehmbaren Distanzelementes, welches an der Gewindeöffnung das Innengewindes am Befestigungselement eingesetzt ist, wird gewährleistet, daß das Befestigungselement stets mit dem erforderlichen Abstand zur Wandoberfläche in das Bohrloch versenkt eingesetzt wird. Das Distanzelement wird dann vor dem Einsetzen der Befestigungsschraube abgenommen.

Durch die Verwendung eines Distanzelementes kann je nach Größe und Tragkraft des Befestigungselementes ein optimaler Abstand zwischen Gewindeöffnung des Innengewindes und der Wandoberfläche für das jeweilige Befestigungselement festgelegt werden.

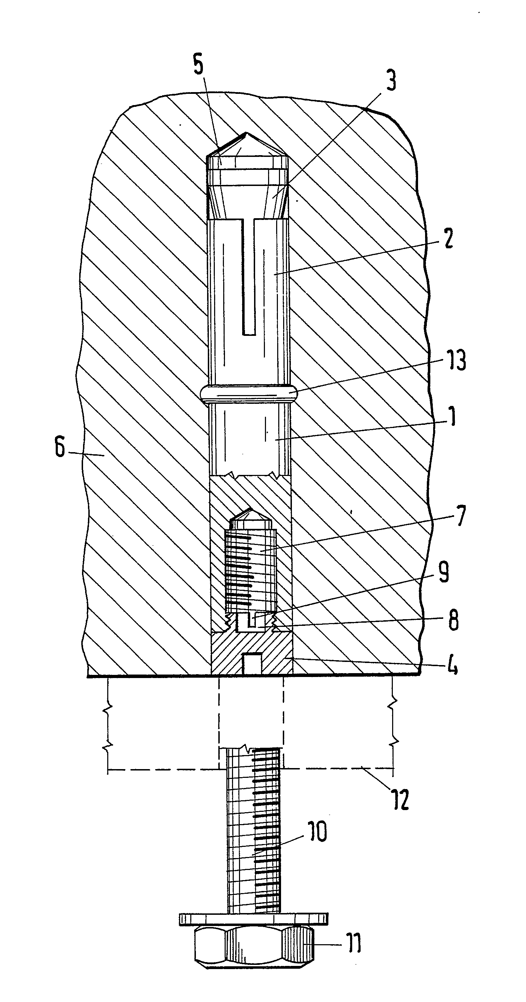

Die Erfindung wird nachfolgend anhand der Zeichnung näher erläutert, die das in eine Wand eingesetzte Befestigungselement vor dem Abnehmen des Distanzelementes zeigt.

Das in der Zeichnung dargestellte Befestigungselement besteht aus einem Gewindebolzen 1, einer Spreizhülse 2, einem Spreizkörper 3 und einem Distanzelement 4. Das Befestigungselement wird in das Bohrloch 5 des Mauerwerks 6 bis in die dargestellte Position eingeschlagen. Danach wird das Distanzelement 4, welches eine Kunststoffkappe ist, mittels eines Schraubenziehers oder dgl. entfernt. Das Distanzelement 4 kann mittels seines in das Innengewinde 7 eingreifenden Abschnitts 8 federnd am Innengewinde eingreifen. Der Abschnitt 8 ist daher mit einem Längsschlitz 9 versehen, der dem Abschnitt 8 eine ausreichende radiale Federwirkung verleiht.

Nach dem Einsetzen des Befestigungselements wird das Distanzelement 4 entnommen, damit die Befestigungsschraube 10 in das Innengewinde 7 eingeschraubt werden kann. Sobald der Schraubenkopf 11 an dem zu befestigenden Gegenstand 12, der hier mit unterbrochenen Linien angedeutet ist, zur Anlage kommt, bewirkt ein Weiterdrehen der Schraube 10, daß das Befestigungselement in Richtung a gezogen wird. Die Spreizhülse 2 liegt dabei an einem ortsfest im Bohrloch gelagerten Federring 13 an, so daß der Spreizkörper 3 in die Spreizhülse 2 eingezogen wird und diese kegelförmig aufspreizt.

### Ansprüche

1. Befestigungselement für den Einsatz in Bohrlöcher eines massiven Mauerwerks mit einem Gewindebolzen, der an einem Ende ein Innengewinde für die Aufnahme einer Befestigungsschraube und im Bereich des anderen Endes eine Spreizhülse und einen in die Spreizhülse einziehbaren Spreizkörper hat, **dadurch gekennzeichnet**, daß in das Innengewinde (7) ein herausnehmbares Distanzelement (4) eingesetzt ist, welches beim Einschlagen des Befestigungselementes in ein Mauerwerk (6) den Abstand des Innengewindes (7) zur Wandoberfläche des Mauerwerks (6) bestimmt.

2. Befestigungselement nach Anspruch 1, **dadurch gekennzeichnet**, daß das Distanzelement (4) eine Kunststoffkappe ist, die federnd in das Innengewinde (7) eingreift.

3. Befestigungselement nach Anspruch 1, **dadurch gekennzeichnet**, daß das Distanzelement (4) mittels eines Gewindeansatzes im Innengewinde (7) befestigt ist.

**Europäisches Patentamt**

**EUROPÄISCHER RECHERCHENBERICHT**

Nummer der Anmeldung

| | EINSCHLÄGIGE DOKUMENTE | | EP 88102218.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | EP - A1 - 0 062 280 (TOX-DÜBEL-WERK) <br> * Seite 7, Zeilen 7-10; Anspruch 8; Fig. 2 * <br> -- | 1-3 | F 16 B 13/06 |
| Y | US - A - 4 611 963 (FRÖHLICH) <br> * Spalte 4, Zeilen 47-68; Fig. 5 * <br> -- | 1-3 | |
| A | DE - A1 - 2 931 624 (GIANNUZZI) <br> * Fig. 21 * <br> -- | 1 | |
| A | US - A - 4 122 753 (KUHLMANN) <br> * Gesamt * <br> ---- | | |
| | | | RECHERCHIERTE SACHGEBIETE (Int. C ' <br><br> F 16 B |

Der vorliegende Recherchenbericht wurde für alle Patentansprüche erstellt.

| Recherchenort | Abschlußdatum der Recherche | Prüfer |
|---|---|---|
| WIEN | 30-06-1988 | REININGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument '
L : aus andern Gründen angeführtes Dokument

& : Mitglied der gleichen Patentfamilie, übereinstimmendes Dokument